# EUROPÄISCHE PATENTSCHRIFT

(11) **EP 0 735 948 B1**
(45) Veröffentlichungstag und Bekanntmachung des Hinweises auf die Patenterteilung: **12.08.1998**
(21) Anmeldenummer: 95905093.1
(22) Anmeldetag: 20.12.1994
(51) Int. Cl.: B29C 67/24, B29C 39/42

(54) **VERFAHREN FÜR DIE HERSTELLUNG VON MASCHINENBAUTEILEN AUS MINERALGUSS**
PROCESS FOR PRODUCING MACHINE COMPONENTS FROM CAST MINERAL
PROCEDE DE PRODUCTION D'ELEMENTS EN MINERAI COULE POUR MACHINES

(30) Priorität: 20.12.1993 DE 4343547
(43) Veröffentlichungstag der Anmeldung: 09.10.1996
(73) Patentinhaber: DÜCHTING PUMPEN MASCHINENFABRIK GmbH & CO KG, 58453 Witten (DE)
(72) Erfinder: DÜCHTING, Wolfgang, D-58453 Witten (DE); NOACK, Horst, Günter, D-48734 Reeken (DE)
(74) Vertreter: Behrendt, Arne, Dipl.-Ing.
(86) Internationale Anmeldenummer: EP9404243
(87) Internationale Veröffentlichungsnummer: WO9517297

(56) Entgegenhaltungen:
- EP-A- 0 054 276
- EP-A- 0 118 073
- EP-A- 0 316 541
- WO-A-85/05069
- DE-A- 4 012 044
- DE-A- 4 206 603
- GB-A- 2 237 578
- PATENT ABSTRACTS OF JAPAN vol. 14, no. 131 (C-0700) 13. März 1990 & JP,A,02 006 359 (HITACHI CHEM CO LTD) 10. Januar 1990

## Beschreibung

Die Erfindung betrifft ein Verfahren für die Herstellung von Maschinenbauteilen aus hoch korrosions- und verschleißfestem Mineralguß, insbesondere für die Herstellung von monolithisch gegossenen Pumpengehäusen oder Pumpenteilen, bei welchem das Bindemittel zunächst in einem Zwangsmischer mit dem Füllstoff gemischt und das fertige Gemisch in eine Gießform gegeben und ausgehärtet wird.

Ein derartiges Verfahren ist beispielsweise aus der DE-A-42 06 603 bekannt. Als Mineralguß für Pumpenteile wird beispielsweise ein Gemisch aus chemisch beständigem und temperaturfestem Reaktionsharz mit geeigneten Füllstoffen verstanden, wie z.B. Siliziumcarbid, Quarzsand, Glas, Keramik etc. Zur Verbesserung der chemischen Beständigkeit und der Verschleißfestigkeit von solchen Pumpenteilen enthält das Gemisch möglichst viel Füllstoff und möglichst wenig Reaktionsharz. Durch Einstellung einer günstigen Kornverteilung enthält ein solcher, hochgefüllter Mineralguß z. B. 10 bis 40 Gew.% Reaktionsharz und 60 bis 90 Gew.% Füllstoff. Ein besonderes Problem bei der Herstellung von z. B. Pumpengehäusen oder Pumpenläufern für Kreiselpumpen aus einem derartigen Mineralguß ist die verhältnismäßig geringe Zugfestigkeit dieses Materials. Diese zu geringe Zugfestigkeit rührt im wesentlichen daher, daß sich das als Bindemittel verwendete Reaktionsharz nicht ausreichend fest mit den Füllstoffpartikeln verbindet. Die mangelhafte Einbettung und Fixierung der Füllstoffpartikel hat auch zur Folge, daß sich an stark belasteten Oberflächen Füllstoffpartikel aus dem Verbund herauslösen, wodurch es trotz der hohen Verschleißfestigkeit der Füllstoffpartikel zu unerwünschten Erosionen an den Oberflächen kommt.

Man hat bei der Herstellung von Pumpengehäusen aus Mineralguß zwar schon versucht, die mangelhafte Zugfestigkeit des Materials durch einen mehrschaligen Aufbau und die Zwischenlage von gegebenenfalls vorgespannten Bewehrungen zu kompensieren. Bei einem derartigen mehrschaligen Aufbau ergeben sich aber gegenüber dem einstückigen, monolithischen Gußstück durch das aufeinanderfolgende Gießen der einzelnen Schalen unvertretbar hohe Fertigungskosten. Ein weiteres Problem bei der Herstellung von dickwandigen

Maschinenbauteilen aus hochgefülltem Mineralguß ist die schlechte Bearbeitbarkeit des fertigen Gießlings. Infolgedessen ist es außerordentlich schwierig, an dem fertigen Gießling etwa erforderliche Nachbearbeitungen vorzunehmen.

Es ist Aufgabe der Erfindung, das Verfahren der eingangs genannten Art dahingehend weiterzubilden, daß das hergestellte monolithische Gußstück eine bessere Zugfestigkeit und einen besseren inneren Zusammenhalt erhält und im Bedarfsfall auf einfache Weise nachbearbeitet werden kann.

Zur Lösung dieser Aufgabe schlägt die Erfindung ausgehend vom Verfahren der eingangs genannten Art vor,
- daß als Bindemittel ein warm aushärtendes Kunstharz-Härtersystem verwendet wird,
- daß das Mischen von Bindemittel und Füllstoff in einem beheizbaren, unter Vakuum stehenden Zwangsmischer bei einer Temperatur von mehr als 20° C und einem Druck von unter 80 mbar, insbesondere unter 20 mbar erfolgt.
- daß der Guß in einer vorgewärmten Gießform als steigender Guß ausgeführt wird,
- daß der in der Gießform befindliche Mineralguß zunächst bei einer Temperatur von mehr als 60° angehärtet und der angehärtete Gießling ausgeformt wird,
- daß der angehärtete Gießling geputzt, vermessen und erforderlichenfalls mechanisch nachbearbeitet wird
- und daß abschließend der Gießling in einem Temperofen bei mehr als 120° C ausgehärtet wird.

Das Verfahren gemäß der Erfindung hat den besonderen Vorteil, daß das Gemisch vor dem Einfüllen in die Gießform vollständig entgast wird. Hierdurch wird insbesondere die mit dem Füllstoff unvermeidbar eingeschleppte Luft vollständig aus dem Gemisch entfernt. Ebenso wie die Luft, werden alle beim Mischen des Kunstharz-Härtersystemes entstehenden Ausgasungen und Restfeuchtigkeit sicher aus dem Gemisch entfernt. Da auch beim aufsteigenden Guß keinerlei Lufteinschlüsse in das Gemisch gelangen können, erhält der Gießling insgesamt eine weitestgehend blasen- und porenfreie Struktur. Dadurch, daß beim Verfahren gemäß der Erfindung alle zwischen den Füllstoffpartikeln befindlichen Zwischenräume vollständig mit Bindemittel ausgefüllt werden, hat der entstehende Gießling eine gegenüber dem Stand der Technik deutlich bessere Festigkeitseigenschaften und ist darüber hinaus wesentlich mehr erosionsbeständig.

Durch die Verwendung eines warm aushärtenden Kunstharz-Härtersystems ist es beim Verfahren gemäß der Erfindung möglich, den Aushärtevorgang gezielt zu beeinflussen, d.h. also das Gemisch während des Misch- und Gießvorganges ausreichend lange flüssig zu halten und danach durch eine gezielte Beheizung der Form den Gießling zu härten. Mit einem warm aushärtenden Harz können im Betrieb auch lange Betriebspausen - beispielsweise am Wochenende - überbrückt werden, ohne daß das Kunstharz-Härtersystem zur Unzeit fest wird. Aus diesem Grunde braucht die Anlage auch bei längeren Betriebspausen nicht leer gefahren und mit Lösungsmitteln gereinigt zu werden. Hierdurch ergibt sich beim Verfahren gemäß der Erfindung eine besonders geringe Umweltbelastung.

Durch das erfindungsgemäß vorgeschlagene abgestufte Aushärten der Formlinge ist es möglich, das Putzen und die gegebenenfalls erforderliche mechanische Nachbearbeitung der Formlinge am noch nicht vollständig ausgehärteten Gießling vorzunehmen, wodurch diese Arbeiten erheblich vereinfacht werden. Nach dem abschließenden endgültigen Aushärten des Gießlinges erhält man einen sauber geputzen, porenfreien, fertig bearbeiteten und absolut maßhaltigen Formling, der sofort weiterverwendet werden kann.

Um das Formfüllungsverhalten beim steigenden Guß zu verbessern, schlägt eine zweckmäßige Weiterbildung der Erfindung vor, daß die Gießform während des Gießvorganges in Vibration versetzt wird.

Für einen einwandfreien Transport des fertigen Gemisches aus dem Zwangsmischer in die Gießform wird zweckmäßig während des Gießvorganges zwischen dem Zwangsmischer und der Gießform ein den Gießvorgang unterstützendes Druckgefälle eingestellt.

So kann beispielsweise der Gießvorgang in einer unter Vakuum stehenden Gießform vorgenommen werden. In diesem Falle wird während des Gießvorganges der Zwangsmischer unter Atmosphärendruck gestellt, so daß das in der Gießform herrschende Vakuum den Gießvorgang unterstützt.

Alternativ kann der Gießvorgang auch in einer unter Atmosphärendruck stehenden Gießform vorgenommen werden. In diesem Falle wird das Gemisch zweckmäßig mit Druckluft von oben nach unten aus dem Zwangsmischer herausgedrückt.

Gegebenenfalls kann der Gießvorgang in der Gießform auch aufsteigend gegen ein zurückweichendes Druckluftpolster vorgenommen werden.

Um gegebenenfalls an der verhältnismäßig teuren Gießmasse zu sparen, können in der Gießform gegebenenfalls verlorene Kerne angeordnet sein, die in den Gießling eingegossen werden.

Ebenso können zum Zwecke der Verstärkung oder für den späteren Anschluß von anderen Bauteilen in der Gießform Eingußteile angeordnet werden, die in den Gießling eingegossen werden.

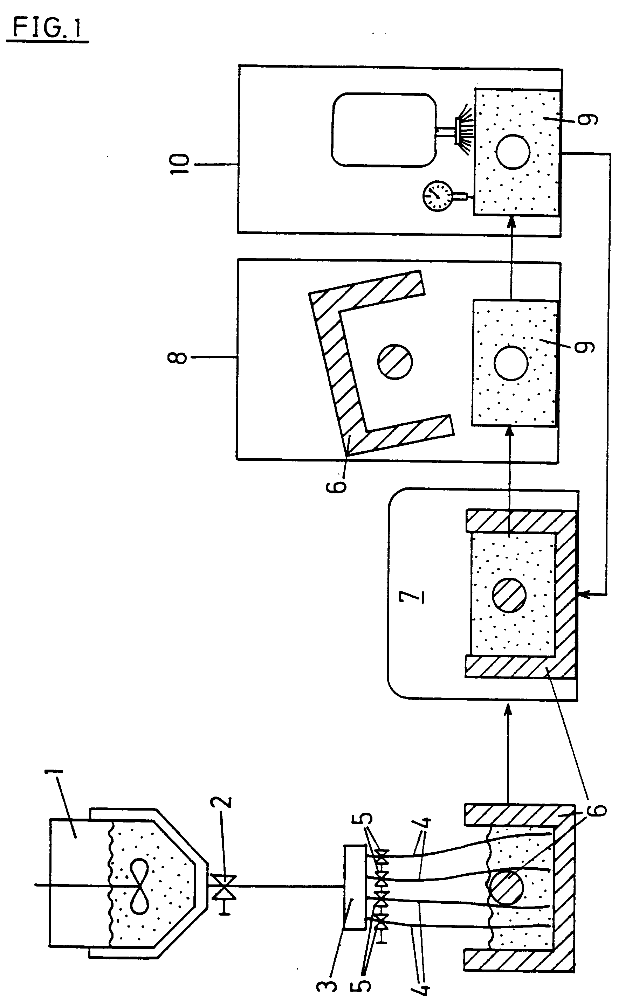

Ein Ausführungsbeispiel der Erfindung wird im folgenden anhand der Zeichnung näher erläutert, in der das Verfahren gemäß der Erfindung schematisch in seinem Ablauf dargestellt ist.

Zunächst wird ein warm aushärtendes Kunstharz-Härtersystem in einen hermetisch verschließbaren Zwangsmischer 1 gegeben, der heizbar und/oder kühlbar ist. Sodann wird der Zwangsmischer 1 entlüftet und auf ein Vakuum von kleiner 80 mbar, vorzugsweise kleiner 20 mbar gebracht. Das Kunstharz-Härtersystem wird bei einer Mischtemperatur von mehr als 20° C unter Vakuum intensiv vermischt, wobei zugleich etwa entweichende Reaktionsgase und Restfeuchtigkeit abgezogen werden. Anschließend wird der Füllstoff in den Zwangsmischer eingefüllt. Danach erfolgt wieder unter Vakuum von kleiner 80 mbar, vorzugsweise 20 mbar die Vermischung von Bindemittel und Füllstoff in dem Zwangsmischer 1. Durch das während des Mischvorganges herrschende und aufrechterhaltende Vakuum wird die gesamte mit dem Füllstoff eingeschleppte Luft und Restfeuchtigkeit aus der Mischung ausgeschieden. Durch eine gezielte Erwärmung oder Kühlung wird das Gemisch auf die für den Gießvorgang optimale Temperatur eingestellt, die mehr als 20° C beträgt.

Beim sich anschließenden Gießvorgang wird das fertige Gemisch an der Unterseite des Zwangsmischers 1 über ein Ventil 2 in einen Verteiler 3 gegeben, in welchem das Gemisch auf mehrere Schläuche 4 verteilt wird, die jeweils durch Absperrorgane 5 einzeln absperrbar sind. Die Schläuche 4 münden im unteren Bereich einer vorgewärmten, beheizbaren Gießform 6, derart, daß das eingefüllte Gemisch von unten nach oben in der Form hochsteigt. Die Gießform 6 ist mit einem Rüttler verbunden und weist gegebenenfalls einen verschließbaren Deckel mit Vakuumanschluß auf.

Nachdem die Gießform 6 über die Schläuche 4 gefüllt worden ist, wird sie in einen Ofen 7 transportiert, in welchem die Form mitsamt Inhalt auf über 60° erwärmt wird, d.h. also auf eine Temperatur, bei welchem das eingefüllte Gemisch angehärtet, aber noch nicht vollständig ausgehärtet wird.

Sodann wird die Form 6 an einem Entformungsplatz 8 entformt. Der angehärtete Gießling 9 wird sodann an einer Putz- und Nachbearbeitungsstation 10 geputzt, vermessen und gegebenenfalls nachbearbeitet. Sodann wird der Gießling 9 zurück in den Ofen 7 verbracht und dort bei einer Temperatur von mehr als 120° C ausgehärtet.

Der oben erläuterte Gießvorgang wird dadurch unterstützt, daß zwischen dem Zwangsmischer 1 und der Gießform 6 ein Druckgefälle hergestellt wird. Dies kann beispielsweise dadurch geschehen, daß die Gießform 6 unter höherem Vakuum als der Zwangsmischer 1 steht. Alternativ kann die Gießform 6 unter Atmosphärendruck stehen, während der Zwangsmischer 1 durch ein von oben aufgebrachtes Druckluftpolster unter einem höheren Druck gesetzt wird. Gegebenenfalls kann auch der aufsteigende Guß in der Gießform 6 unter Überdruck gegen ein zurückweichendes Druckluftpolster erfolgen. Wesentlich ist lediglich, daß beim Transport des Gemisches vom Zwangsmischer 1 in die Gießform 6 keine Luft in das Gemisch gelangen kann.

## Patentansprüche

1. Verfahren für die Herstellung von Maschinenbauteilen aus hoch korrosions- und, verschleißfestem Mineralguß, insbesondere für die Herstellung von monolithisch gegossenen Pumpengehäusen oder Pumpenteilen, bei welchem das Bindemittel zunächst in einem Zwangsmischer mit dem Füllstoff gemischt und das fertige Gemisch in eine Gießform gegeben und dann ausgehärtet wird, **dadurch gekennzeichnet,**
• daß als Bindemittel ein warm aushärtendes Kunstharz-Härtersystem verwendet wird,
• daß das Mischen von Bindemittel und Füllstoff in einem beheizbaren, unter Vakuum stehenden Zwangsmischer (1) bei einer Temperatur von mehr als 20° C und einem Druck von unter 80 mbar, insbesondere unter 20 mbar erfolgt,
• daß der Guß in einer vorgewärmten Gießform (6) als steigender Guß ausgeführt wird;
• daß der in der Gießform (6) befindliche Mineralguß zunächst bei einer Temperatur von mehr als 60° C angehärtet und der angehärtete Gießling (9) ausgeformt wird,
• daß der angehärtete Gießling (9) geputzt, vermessen und erforderlichenfalls nachbearbeitet wird,
• und daß abschließend der Gießling (9) in einem Temperofen (7) bei mehr als 120° C ausgehärtet wird.

2. Verfahren nach Anspruch 1, dadurch gekennzeichnet, daß die Gießform (6) während des Gießvorganges in Vibration gesetzt wird.

3. Verfahren nach den Ansprüchen 1 oder 2, dadurch gekennzeichnet, daß während des Gießvorganges zwischen dem Zwangsmischer (1) und der Gießform (6) ein den Gießvorgang unterstützendes Druckgefälle eingestellt wird.

4. Verfahren nach Anspruch 3, dadurch gekennzeichnet, daß der Gießvorgang in einer unter Vakuum stehenden Gießform (6) vorgenommen wird.

5. Verfahren nach Anspruch 3, dadurch gekennzeichnet, daß der Gießvorgang in einer unter Atmosphärendruck stehenden Gießform (6) vorgenommen wird.

6. Verfahren nach Anspruch 5, dadurch gekennzeichnet, daß der Gießvorgang in der Gießform (6) gegen ein unter Überdruck stehendes Druckluftpolster erfolgt.

7. Verfahren nach einem der Ansprüche 1 bis 6, dadurch gekennzeichnet, daß in der Gießform (6) verlorene Kerne angeordnet sind, die in den Gießling (9) eingegossen werden.

8. Verfahren nach einem der Ansprüche 1 bis 7, dadurch gekennzeichnet, daß in der Gießform (6) Eingußteile angeordnet sind, die in den Gießling (9) eingegossen werden.

## Claims

1. A process for the production of machine components from highly corrosion-resistant and wear-resistant cast mineral, in particular for the production of monolithically cast pump casings or pump members, in which the binding agent is firstly mixed with the filler in a positive-action mixer and the finished mixture is put into a casting mould and is then hardened, characterised in that
- a hot-hardening synthetic resin-hardener system is used as the binding agent,
- the operation of mixing binding agent and filler is effected in a heatable positive-action mixer (1) which is under vacuum, at a temperature of more than 20°C and a pressure of below 80 mbar, in particular below 20 mbar,
- the casting operation is implemented in a preheated casting mould (6) in the form of a bottom-pour casting operation,
- the cast mineral in the casting mould (6) is firstly initially hardened at a temperature of more than 60°C and the initially hardened casting (9) is removed from the mould,
- the initially hardened casting (9) is cleaned, measured and if necessary dressed, and
- finally the casting (9) is hardened in an annealing furnace (7) at more than 120°C.

2. A process according to claim 1 characterised in that the casting mould (6) is caused to vibrate during the casting procedure.

3. A process according to claim 1 or claim 2 characterised in that a pressure drop for promoting the casting procedure is set during the casting procedure between the positive-action mixer (1) and the casting mould (6).

4. A process according to claim 3 characterised in that the casting procedure is effected in a casting mould (6) which is under vacuum.

5. A process according to claim 3 characterised in that the casting procedure is effected in a casting mould (6) which is under atmospheric pressure.

6. A process according to claim 5 characterised in that the casting procedure is effected in the casting mould (6) against a compressed air cushion which is under an increased pressure.

7. A process according to one of claims 1 to 6 characterised in that arranged in the casting mould (6) are lost cores which are cast into the casting (9).

8. A process according to one of claims 1 to 7 characterised in that arranged in the casting mould (6) are cast-in portions which are cast into the casting (9).

## Revendications

1. Procédé de fabrication de composants de construction de machines en une coulée minérale hautement résistante à la corrosion et à l'usure notamment pour la fabrication de carters de pompe ou de parties de pompe coulées monolithes, où le liant est mélangé tout d'abord dans un malaxeur à mélange forcé avec la charge et le mélange fini est introduit dans un moule et est ensuite durci, **caractérisé**
• en ce qu'il est utilisé comme liant un système de durcissement en résine synthétique thermodurcissant,
• en ce que le mélange du liant et de la charge a lieu dans un malaxeur à mélange forcé (1) pouvant être chauffé, mis sous vide, à une température supérieure à 20°C et une pression inférieure à 80 mbar, notamment inférieure à 20 mbar,
• en ce que la coulée a lieu dans un moule préchauffé (6) sous forme de coulée ascendante ;
• en ce que la coulée minérale se trouvant dans le moule (6) est tout d'abord soumise à un durcissement initial à une température supérieure à 60°C et que le produit coulé (9) ayant été soumis à un début de durcissement est démoulé,
• que le produit moulé (9) ayant été soumis à un début de durcissement est nettoyé, mesuré et le cas échéant usiné additionnellement,
• et en ce qu'ensuite le produit coulé (9) est durci dans un four à recuire (7) à une température supérieure à 120°C.

2. Procédé selon la revendication 1, caractérisé en ce que le moule (6) est mis en vibrations pendant l'opération de coulée.

3. Procédé selon les revendications 1 ou 2, caractérisé en ce qu'il est réglé pendant l'opération de coulée, entre le malaxeur à mélange forcé (1) et le moule (6) une chute de pression soutenant l'opération de coulée.

4. Procédé selon la revendication 3, caractérisé en ce que l'opération de coulée est réalisée dans un moule (6) mis sous vide.

5. Procédé selon la revendication 3, caractérisé en ce que l'opération de coulée a lieu dans un moule (6) sous pression atmosphérique.

6. Procédé selon la revendication 5, caractérisé en ce que l'opération de coulée a lieu dans le moule (6) contre un coussinet d'air comprimé mis en surpression.

7. Procédé selon l'une des revendication 1 à 6, caractérisé en ce que des noyaux perdus sont disposés dans le moule (6) qui sont coulés dans le produit moulé (9).

8. Procédé selon l'une des revendications 1 à 7, caractérisé en ce que sont disposées dans le moule (6) des pièces d'insertion qui sont coulées dans le produit moulé (9).
